(19) Europäisches Patentamt / European Patent Office / Office européen des brevets

(11) **EP 4 306 442 B1**

(12) **EUROPEAN PATENT SPECIFICATION**

(45) Date of publication and mention
of the grant of the patent:
**07.05.2025   Bulletin 2025/19**

(21) Application number: **22185003.5**

(22) Date of filing: **14.07.2022**

(51) International Patent Classification (IPC):
**B65D 41/00** (2006.01)        **C08L 23/08** (2025.01)

(52) Cooperative Patent Classification (CPC):
(C-Sets available)
**C08F 210/16; C08F 110/02; C08L 23/0815;**
C08L 2205/025; C08L 2207/062        (Cont.)

(54) **COMPOSITION**

ZUSAMMENSETZUNG

COMPOSITION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.01.2024   Bulletin 2024/03**

(73) Proprietor: **Borealis AG
1020 Vienna (AT)**

(72) Inventors:
• **WANG, Jingbo
  4021 Linz (AT)**
• **DELAVIERE, Lionel
  92400 Courbevoie (FR)**
• **WEICKINGER, Magdalena
  92400 Courbevoie (FR)**

(74) Representative: **Dehns
10 Old Bailey
London EC4M 7NG (GB)**

(56) References cited:
**EP-A1- 2 402 391        WO-A1-2017/093390
US-A1- 2003 105 198**

(52) Cooperative Patent Classification (CPC): (Cont.)

C-Sets
**C08F 10/02, C08F 4/6492;**
**C08F 210/16, C08F 2/001;**
**C08L 23/0815, C08L 23/06, C08K 5/20;**
C08F 110/02, C08F 2500/12, C08F 2500/07;
C08F 210/16, C08F 210/08, C08F 2500/12,
C08F 2500/34, C08F 2500/31

## Description

The present invention relates to a polymer composition comprising a multimodal high density polyethylene (HDPE) and a saturated amide slip agent which is suitable for use in the manufacture of moulded articles. The invention further relates to articles comprising said polymer composition and to the use of said composition for the manufacture of an article.

## Background

High density polyethylene (HDPE) is widely used in moulding applications due to its excellent combination of processability and mechanical properties. It is known that the performance of polyethylene is related to the density. The higher the density, the better the stiffness, however impact properties tend to decrease.

The present invention relates to a composition comprising an HDPE resin suitable for preparing injection-moulded articles, especially caps and closures. In particular, the caps and closures of the invention can be used for closing bottles, such as bottles for carbonated and still drinks.

Caps and closures are generally prepared with HDPE resins as they offer attractive mechanical properties, such as stiffness. However, it will be appreciated that compositions designed for such applications also require other properties which facilitate ease of use. In some cases, a low coefficient of friction is desired to facilitate unscrewing of the cap or closure. Normally, this is achieved via the addition of a slip agent. However, this introduces a well-known critical problem to the final article. Some of the commonly used slip agents, such as erucamide, whilst providing the desired properties, suffer from oxidation which imparts unpleasant taste and odour to the foodstuff or beverage within the container. Alternatives are thus sought.

One solution is presented in EP 1278797, which is to use saturated amides as slip agents, as these do not suffer from the oxidation problems. However, such saturated amides tend to give poorer slip effects. Moreover, typically the slip effect is time dependent and it can often take a long time for the desired low coefficient of friction to be attained.

An alternative solution is to use a permanent slip agent, which is typically a polydimethylsiloxane (PDMS) based solution, which enables the slip effect to be achieved instantly and it does not change with time. However, in order to achieve a sufficiently good slip effect, high amounts of PDMS are often required, which has several disadvantages, including negative impacts on other properties of the composition.

Another issue is related to sustainability. One possible way to help make packaging more sustainable is to reduce the weight the packaging, however this requires the use of materials with improved stiffness and impact balance.

Therefore, a new solution with combined slip effect and improved mechanical profile is desired. The present inventors have surprising found that by combining the use of a saturated amide slip agent together with a multimodal HDPE, an improved balance of properties can be attained. In particular, the composition allows for the attainment of an attractive low coefficient of friction. Surprisingly, this positive slip effect can be achieved together with desirable mechanical properties, e.g. in terms of stiffness and impact.

## Summary of Invention

Viewed from one aspect the invention provides a polymer composition comprising:

(i) 95.0 to 99.95 wt%, relative to the total weight of the polymer composition, of a multimodal high density polyethylene (HDPE) with a density of 945 to 980 kg/m$^3$ measured according to ISO 1183, and an MFR$_2$ of 0.1 to 1.3 g/10min measured according to ISO 1133 at 190 °C and a load of 2.16 kg; and wherein the multimodal HDPE comprises at least two fractions:

(A) 30 to 70 wt%, relative to the total weight of the multimodal HDPE, of a lower molecular weight fraction being a polyethylene with a density in the range of 955 to 980 kg/m$^3$ measured according to ISO 1183 and an MFR$_2$ of 100 to 600 g/10 min measured according to ISO 1133 at 190 °C and a load of 2.16 kg; and

(B) 30 to 70 wt%, relative to the total weight of the multimodal HDPE, of a higher molecular weight fraction being a polyethylene with a density in the range of 930 to 960 kg/m$^3$ measured according to ISO 1183 and an MFR$_2$ of 0.0001 to 1.0 g/10 min measured according to ISO 1133 at 190 °C and a load of 2.16 kg; and

(ii) 0.08 to 0.4 wt%, relative to the total weight of the polymer composition, of at least one saturated amide slip agent.

Viewed from another aspect the invention provides an article comprising a polymer composition as hereinbefore defined.

Viewed from a further aspect, the invention provides the use of the polymer composition as hereinbefore defined

EP 4 306 442 B1

in the manufacture of an article, preferably an injection or compression moulded article, such as a cap or closure.

**Detailed Description of Invention**

**High Density Polyethylene (HDPE)**

The polymer of the invention is a high density ethylene polymer (HDPE). The HDPE may be a homopolymer or a copolymer, but is preferably an ethylene copolymer. By ethylene copolymer is meant a polymer the majority by weight of which derives from ethylene monomer units (i.e. at least 50 wt% ethylene relative to the total weight of the copolymer). The comonomer contribution preferably is up to 10 % by mol, more preferably up to 5 % by mol. Ideally however there are very low levels of comonomer present in the polymers of the present invention such as 0.1 to 2.0 mol%, e.g. 0.1 to 1.0 mol%.

The other copolymerisable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-pent-1-ene. The use of 1-hexene, 1-octene and 1-butene, or mixtures thereof, is particularly preferred, especially 1-hexene and 1-butene. Ideally there is only one comonomer present.

The polymer of the invention is multimodal, i.e, comprising at least two fractions. The polymer is most preferably bimodal.

Usually, a polyethylene composition comprising at least two polyethylene fractions, which have been produced under different polymerisation conditions resulting in different (weight average) molecular weights and molecular weight distributions for the fractions, is referred to as "multimodal". Accordingly, in this sense the HDPE polymers of the invention are multimodal polyethylenes. The prefix "multi" relates to the number of different polymer fractions the composition is consisting of. The polyethylene may also be multimodal with respect to comonomer content.

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The HDPE of the invention has an $MFR_2$ of 0.1 to 1.3 g/10 min. Preferable ranges for $MFR_2$ are 0.3 to 1.3 g/10 min, more preferably 0.4 to 1.1 g/10min, such as 0.5 to 1.0 g/10min.

The HDPE of the invention preferably has an $MFR_{21}$ of 15 to 90 g/10min, such as 20 to 85 g/10 min, most preferably 30 to 80 g/10 min.

The HDPE of the invention preferably has a Flow Rate Ratio (FRR) of the $MFR_{21}/MFR_2$ of at least 25.0, like at least 35.0, more preferably at least 45.0. Furthermore, the HDPE of the invention preferably has a Flow Rate Ratio (FRR) of the $MFR_{21}/MFR_2$ of up to 80.0, like up to 75.0, more preferably up to 70.0.

The density of the polymer is in the range 945 to 980 kg/m$^3$ determined according to ISO 1183. The polymers of the invention are therefore high density polyethylenes, HDPE. Preferably, the polymer has a density of 950 to 970 kg/m$^3$, more preferably 951 to 965 kg/m$^3$, even more preferably 952 to 963 kg/m$^3$, such as 953 to 960 kg/m$^3$.

The HDPE of the invention preferably has a molecular weight distribution (MWD) in the range 7 to 30, more preferably 9 to 25, such as 10 to 20.

The HDPE of the invention comprises at least a lower molecular weight fraction (A) and a higher molecular weight fraction (B). In one particularly preferable embodiment, the HDPE consists of fractions (A) and (B). The weight ratio of fraction (A) to fraction (B) in the composition is ideally in the range 30:70 to 70:30, more preferably 35:65 to 65:35, most preferably 40:60 to 60:40. In some embodiments the ratio may be 35 to 60 wt% of fraction (A) and 40 to 65 wt% fraction (B), such as 40 to 55 wt% of fraction (A) and 45 to 60 wt% fraction (B), wherein the wt% values are relative to the total weight of the multimodal HDPE.

In a particularly preferred embodiment, the wt% values for fractions (A) and (B) add up to 100 %.

Each of Fraction (A) and Fraction (B) may be an ethylene homopolymer or an ethylene copolymer. By ethylene homopolymer is meant a polymer comprising at least 97 mol% (such as at least 98 mol%, especially at least 99.5 mol%) ethylene monomer units. The term "ethylene copolymer" is defined above. Most preferably, fraction (A) is an ethylene homopolymer and fraction (B) is an ethylene copolymer.

The HDPE of the invention is typically produced in a multistage process wherein fractions (A) and (B) are produced in subsequent stages. In such a case, the properties of the fractions produced in the second step (or further steps) of the multistage process can either be inferred from polymers which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13. Thus, although not directly measurable on the multistage process products, the properties of the fractions produced in higher stages of such a multistage process can be determined by applying either or both of the above methods. The skilled person will be able to select the appropriate method.

HDPEs produced in a multistage process are also designated as *"in-situ"* blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture.

The lower molecular weight fraction (A) has an $MFR_2$ of 100 to 600 g/10min, preferably of 125 to 500 g/10min, more preferably 150 to 400 g/10min, such as 200 to 380 g/10 min.

Fraction (A) has a density of 955 to 980 kg/m$^3$, preferably 960 to 978 kg/m$^3$, such as 965 to 975 kg/m$^3$.

Fraction (A) can be an ethylene homopolymer or copolymer. Preferably, Fraction (A) is an ethylene homopolymer.

The higher molecular weight fraction (B) has an $MFR_2$ of 0.0001 to 1.0 g/10min, preferably of 0.0005 to 0.5 g/10min, more preferably 0.0008 to 0.1 g/10min, such as 0.001 to 0.05 g/10 min.

Fraction (B) has a density of 930 to 960 kg/m$^3$, preferably 932 to 955 kg/m$^3$, such as 935 to 950 kg/m$^3$.

Fraction (B) can be an ethylene homopolymer or copolymer. Fraction (B) is preferably a copolymer. Preferred ethylene copolymers employ alpha-olefins (e.g. C3-12 alpha-olefins) as comonomers. Examples of suitable alpha-olefins include but-1-ene, hex-1-ene and oct-1-ene. But-1-ene is an especially preferred comonomer.

The density difference (denoted Δdensity) between the lower molecular weight fraction (A) and the higher molecular weight fraction (B) is ideally less than 32 kg/m$^3$. Preferably, the density difference is 1 to 32 kg/m$^3$, more preferably 5 to 31 kg/m$^3$, such as 7 to 30 kg/m$^3$.

The multimodal HDPE preferably has a tensile modulus in the range 930 to 1500 MPa, more preferably 940 to 1200 MPa, when measured according to ISO 527-2.

The multimodal HDPE preferably has a notched impact strength in the range 13 to 25 kJ/m$^2$, preferably 15 to 20 kJ/m$^2$ when measured according to ISO179, 1eA at +23 °C.

## Preparation of HDPE

The HDPE may be produced by any suitable polymerisation method known in the art using conditions which create a multimodal (e.g. bimodal) polymer product, ideally using a Ziegler Natta catalyst system. Typically, a two or more stage, i.e. multistage, polymerisation process is used with different process conditions in the different stages or zones (e.g. different temperatures, pressures, polymerisation media, hydrogen partial pressures, etc). Preferably, the multimodal (e.g. bimodal) composition is produced by a multistage polymerisation, e.g. using a series of reactors, with optional comonomer addition preferably in only the reactor(s) used for production of the higher/highest molecular weight component(s). A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

Preferably, the HDPE is a bimodal HDPE prepared in a two-stage polymerisation process.

The first polymerisation stage produces an ethylene homopolymer or an ethylene copolymer, typically an ethylene homopolymer, which is subsequently fed to the second polymerisation stage. The second polymerisation stage can produce a further ethylene homopolymer, or an ethylene copolymer, preferably an ethylene copolymer.

The first polymerisation stage is preferably a slurry polymerisation step.

The slurry polymerisation usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amounts of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in the first polymerisation stage is typically from 60 to 100 °C, preferably from 65 to 95 °C, more preferably from 70 to 90 °C. An excessively high temperature should be avoided to prevent partial dissolution of the polymer into the diluent and the fouling of the reactor. The pressure is generally from 1 to 150 bar, preferably from 40 to 80 bar.

The slurry polymerisation may be conducted in any known reactor used for slurry polymerisation. Such reactors include a continuous stirred tank reactor and a loop reactor. It is especially preferred to conduct the slurry polymerisation in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerisation stage as a slurry polymerisation in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerisation stage continuously.

Hydrogen is typically introduced into the first polymerisation stage for controlling the $MFR_2$ of the resultant polymer. The amount of hydrogen needed to reach the desired MFR depends on the catalyst used and the polymerisation conditions. The desired polymer properties may be obtained in slurry polymerisation in a loop reactor with the molar ratio of hydrogen to ethylene of from 100 to 1000 mol/kmol (or mol/1000 mol) and preferably of from 200 to 800 mol/kmol.

The average residence time in the first polymerisation stage is typically from 20 to 120 minutes, preferably from 30 to 80 minutes. As it is well known in the art the average residence time $\tau$ can be calculated from Equation 1 below:

$$\text{Equation 1: Residence Time}$$

$$\tau = \frac{V_R}{Q_o}$$

Where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the ethylene feed rate.

In the second polymerisation stage, ethylene is polymerised, optionally together with at least one alpha-olefin comonomer, in the presence of the catalyst and the ethylene polymer produced in the first polymerisation stage. It will thus be appreciated that the second polymerisation stage generates an ethylene polymer, which combines with the ethylene polymer from the first polymerisation stage, to form the multimodal HDPE of the invention. Preferable comonomers are discussed hereinbefore, however it is noted that it is particularly preferable if the at least one alpha-olefin is 1-butene.

The second polymerisation stage is preferably a gas phase polymerisation step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

A chain transfer agent (e.g. hydrogen) is typically added to the second polymerisation stage, preferably in amounts of 50 to 500 mol of $H_2$/kmol ethylene.

The split between the first polymerisation stage and the second polymerisation stage (i.e. between the slurry polymerisation and the gas phase polymerisation) is typically 30:70 to 70:30, more preferably 35:65 to 65:35, most preferably 40:60 to 60:40.

Prepolymerisation

The polymerisation steps discussed above may be preceded by a prepolymerisation step. The purpose of the prepolymerisation is to polymerise a small amount of polymer onto the catalyst at a low temperature and/or a low monomer concentration. By prepolymerisation it is possible to improve the performance of the catalyst in slurry and/or modify the properties of the final polymer. The prepolymerisation step is conducted in slurry.

Thus, the prepolymerisation step may be conducted in a loop reactor. The prepolymerisation is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerisation step is typically from 0 to 90 °C, preferably from 20 to 80 °C and more preferably from 55 to 75 °C.

The pressure is not critical and is typically from 1 to 150 bar, preferably from 40 to 80 bar.

The amount of monomer is typically such that from 0.1 to 1000 grams of monomer per one gram of solid catalyst component is polymerised in the prepolymerisation step. As the person skilled in the art knows, the catalyst particles recovered from a continuous prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerisation step when a prepolymerisation step is present. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is understood within the scope of the invention, that the amount of polymer produced in the prepolymerisation typically lies within 1 - 5 wt% in respect to the final HDPE.

Catalyst

The polymerisation is typically conducted in the presence of a Ziegler-Natta polymerisation catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in EP 1378528 A1 and EP 2994506.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically, triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors.

In the production of the HDPE of the present invention, preferably a compounding step is applied, wherein the composition of the base resin, i.e. the blend, which is typically obtained as a base resin powder from the reactor, is extruded in an extruder and then pelletised to polymer pellets in a manner known in the art.

The HDPE may also contain minor quantities of additives such as pigments, nucleating agents, antistatic agents, fillers, antioxidants, etc., generally in amounts of up to 10 % by weight, preferably up to 5 % by weight.

Optionally, additives or other polymer components can be added to the HDPE during the compounding step in the amount as described above. Preferably, the HDPE of the invention obtained from the reactor is compounded in the extruder together with additives in a manner known in the art.

## Composition

The invention relates to a composition comprising the HDPE as defined above, together with at least one saturated amide slip agent.

The polymer composition comprises 95.0 to 99.95 wt% of the HDPE, relative to the total weight of the polymer composition. Preferably, the HDPE is present in an amount of 96.0 to 99.92 wt%, more preferably 97.0 to 99.90 wt%, relative to the total weight of the polymer composition.

The at least one saturated amide slip agent is present in an amount of 0.08 to 0.4 wt%, relative to the total weight of the polymer composition. It is preferred if the at least one amide slip agent is present in an amount of 0.1 to 0.3 wt%, more preferably 0.12 to 0.25 wt%, relative to the total weight of the polymer composition.

Whilst it is within the ambit of the invention for polymers other than the HDPE to be present in the polymer composition, it is preferable if the HDPE is the only polymer component present.

The polymer composition preferably consists of the HDPE and the at least one saturated amide slip agent. For the avoidance of doubt, it is envisaged that usual polymer additives, e.g. pigments, nucleating agents, antistatic agents, fillers and antioxidants, may be present even when the polymer composition "consists" of the HDPE and the at least one saturated amide slip agent. The term "consists of" is not intended therefore to exclude the presence of polymer additives. It does however exclude the presence of other polymer components for blending with the HDPE and the at least one saturated amide slip agent. If a carrier polymer is used as part of a masterbatch, that is not excluded however. The composition may be free of any other mixing polymers but may still comprise minor amounts of carrier polymer used for masterbatches.

In one embodiment, however, it is preferred if the composition does not comprise a nucleating agent.

The polymer composition is typically prepared by blending and homogeneously mixing the components (e.g. the HDPE and the at least one saturated amide slip agent), for example by melt mixing in an extruder.

The polymer composition ideally has a coefficient of friction (CoF) of less than 0.3 when measured according to ISO 8295 on injection moulded specimens prepared according to ISO 17855-2, at 14 days, as described under "Test Methods". A preferable range for the CoF is 0.28 to 0.26, more preferably 0.10 to 0.26.

## Saturated Amide Slip Agent

The at least one saturated amide slip agent may be any suitable saturated amide slip agent known in the art. The term "slip agent" is known to the skilled person and thus it will be understood that the amide slip agent may be any slip agent comprising at least one amide group. Furthermore, the amide slip agent is a saturated compound, the meaning of "saturated" in this context will be well known to the person skilled in the art. Slip aids are used to reduce the force required to remove the closure from a bottle or package.

In a preferable embodiment, the amide slip agent is a fatty acid amide derivative. The slip agent may thus preferably be a saturated fatty acid amide derivative.

The saturated fatty acid amide may comprise 8 to 30 carbon atoms. The saturated fatty acid amides are preferably linear fatty acid amides represented by the formula $CH_3(CH_2)nCONH_2$ in which n is 6 to 28. Linear saturated fatty acid amides containing at least 12 carbon atoms and mixtures thereof are particularly preferred. Most preferably, the saturated fatty acid amide is selected from the group consisting of behenamide, arachidamide, stearamide, palmitamide, myristamide, lauramide and mixtures thereof. It is especially preferred if the saturated fatty acid amide is selected from the group consisting of behenamide, stearamide and mixtures thereof.

It is within the ambit of the invention for the composition to comprise a single amide slip agent or a mixture of two or more different amide slip agents. It is most preferable for a single saturated amide slip agent to be employed.

## Articles

Still further, the present invention relates to an article comprising the composition as described above. The invention also relates to the use of such a composition in the manufacture of an article.

In one embodiment, the article comprises at least 90.0 wt%, relative to the total weight of the article, of the composition of the invention, more preferably at least 95.0 wt%, still more preferably at least 98.0 wt%, like at least 99.9 wt%. It is especially preferred that the article consists of the composition.

Articles according to the present invention may be compression moulded articles or injection moulded articles, preferably injection moulded articles, more preferably a cap or closure. Such articles may be prepared by conventional methods as known in the art.

It will be appreciated that any parameter mentioned above is measured according to the detailed test given below. In any parameter where a narrower and broader embodiment are disclosed, those embodiments are disclosed in connection with the narrower and broader embodiments of other parameters.

The invention will now be described with reference to the following non limiting examples.

## Test Methods:

## Melt Flow Rate (MFR)

The melt flow rates were measured at 190 °C with a load of 2.16 kg (MFR$_2$) or 21.6 kg (MFR$_{21}$) according to ISO 1133

*Calculation of MFR$_2$ of Fraction (A) and (B)*

$$logA = x \cdot logB + (1-x) \cdot logC$$

$$C = 10^{\wedge \frac{(logA - x.logB)}{(1-x)}}$$

B = MFR$_2$ of Fraction (A)
C = MFR$_2$ of Fraction (B)
A = final MFR$_2$ (mixture) of multimodal HDPE
X = weight fraction of Fraction (A)

## Flow Rate Ratio (FRR21/2))

FRR was determined as the ratio between the MFR$_{21}$ and the MFR$_2$.

## GPC

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \text{ x } 10^{-3} \text{ mL/g,} \quad \alpha_{PS} = 0.655$$

$$K_{PE} = 39 \text{ x } 10^{-3} \text{ mL/g,} \quad \alpha_{PE} = 0.725$$

$$K_{PP} = 19 \text{ x } 10^{-3} \text{ mL/g,} \quad \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

**Comonomer contents**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. {klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C$ $\{^1H\}$ NMR spectra were processed, integrated and relevant quantitative properties determined from the integrals. All chemical shifts are internally referenced to the bulk methylene signal ($\delta$+) at 30.00 ppm.

The amount of ethylene was quantified using the integral of the methylene ($\delta$+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal))$$

The amount isolated 1-butene incorporated in EEBEE sequences was quantified using the integral of the $_*B2$ sites at 38.3 ppm accounting for the number of reporting sites per comonomer:

$$B = I_{*B2}$$

The amount consecutively incorporated 1-butene in EEBBEE sequences was quantified using the integral of the $\alpha\alpha B2B2$ site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the $\beta\beta B2B2$ site at 24.7 ppm accounting for the number of reporting sites per comonomer:

$$BEB = 2 * I\beta\beta B2B2$$

Due to the overlap of the *B2 and *$\beta$B2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal))$$

The amount isolated 1-hexene incorporated in EEHEE sequences was quantified using the integral of the $_*B4$ sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal))$$

The mole percent comonomer incorporation is calculated from the mole fraction:

$$B\,[mol\%] = 100 * fB$$

$$H\,[mol\%] = 100 * fH$$

The weight percent comonomer incorporation is calculated from the mole fraction:

B [wt%] = 100 * ( fB * 56.11) / ( (fB * 56.11) + (fH * 84.16) + ((1-(fB + fH)) * 28.05) ) H [wit%] = 100 * ( fH * 84.16 ) / ( (fB * 56.11) + (fH * 84.16) + ((1-(fB + fH)) * 28.05) )

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373
Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253

**Density**

The density was measured according to ISO 1183 and ISO1872-2 for sample preparation.

**Tensile modulus**

Tensile properties were measured on injection moulded samples according to ISO 527-2, Specimen type Multipurpose bar 1A , 4 mm thick. Tensile modulus was measured at a speed of 1 mm/min. Sample preparation was done according to ISO 17855-2.

**Notched Impact Strength**

Notched Impact strength was measured according to ISO179, 1eA at +23 °C, specimen $80 * 10 * 4\,mm^3$. Sample preparation was done according to ISO 17855-2.

**Coefficient of Friction (CoF)**

The CoF was measured on 150 x 80 x 1mm$^3$ thick injection moulded specimen based on ISO 8295. The injection moulding was done according to ISO 17855-2. The CoF test was performed on a Zwick Z1.0 S machine. The following conditions were used:

Test speed: 100 mm/min $\pm$ 10 mm/min
Measuring distance: 56 mm
Loading weight: 200 g $\pm$ 2 g

Before the measurements the specimen was stored at 23°C, RH 50% for desired time, e.g. 1 day, 3 days, 7 days, etc.

**Experimental**

Materials:

**Slip Agent 1:** Finawax S, a stearamide commercially available from Fine Organics.

**Slip Agent 2:** Finawax B, a Behenamide commercially available from Fine Organics.

**Slip Agent 3:** Finawax E, a Erucamide commercially available from Fine Organics.

**HDPE1:** a bimodal HDPE produced with a ZN catalyst (as disclosed in EP 2994506) in a pilot plant, with a configuration of prepolymerisation- loop - gas phase reactor, having MFR 0.8 g/10min, density 955.5 kg/m$^3$.

**HDPE2:** a bimodal HDPE produced with a ZN catalyst (as disclosed in EP 2994506) in a pilot plant, with a configuration of prepolymerisation- loop - gas phase reactor, having MFR 1.28 g/10min, density 962.5 kg/m$^3$.

**HDPE3:** a unimodal HDPE produced with a Lynx 200 catalyst (supplied by Grace Catalysts Technologies) in a pilot plant, with a configuration of prepolymerisation-loop reactor, having MFR 0.97 g/10min, density 961.5 kg/m$^3$.

**HDPE4:** is described in EP 2402391, and also in Table 1.

Table 1 shows the typical polymerisation parameters and final polymer properties for the HDPE1, HDPE2, HDPE3 and HDPE4.

**Table 1**

|  | HDPE1 | HDPE2 | HDPE3 | HDPE 4 |
|---|---|---|---|---|
| **Prepoly** |  |  |  |  |
| Temp. (°C) | 70 | 70 | 60 | 70 |
| Press. (kPa) | 5700 | 5685 | 5474 | 6300 |
| H2 (g/h) | 5.0 | 5.0 | 5.0 | 5.2 |
| **Loop reactor** |  |  |  |  |
| Temp. (°C) | 95 | 95 | 95 | 95 |
| Press. (kPa) | 5500 | 5365 | 5188 | 5800 |
| C2 conc. (mol-%) | 3.5 | 3.9 | 4.2 | 6.8 |
| H2/C2 (mol/kmol) | 430.0 | 335.0 | 91.2 | 347 |
| Density | 970 | 970 | 960 | 970 |
| split % | 49.0 | 45.7 | 100.0 | 52 |
| MFR2 (g/10 min) | 350 | 320 | 0.97 | 400 |

(continued)

| GPR | | | | |
|---|---|---|---|---|
| Temp. (°C) | 85 | 85 | - | 85 |
| Press. (kPa) | 2000 | 2000 | - | 2000 |
| H2/C2 (mol/kmol) | 110 | 132 | - | 81 |
| C4/C2 (mol/kmol) | 25.0 | 8.3 | - | 80 |
| split % | 51.0 | 54.3 | - | 48 |
| **Pellet** | | | | |
| Density (kg/m3) | 955.5 | 962.5 | 961.5 | 954.0 |
| MFR2 (g/10 min) | 0.8 | 1.3 | 0.94 | 1.5 |
| MFR21 (g/10 min) | 47.35 | 77.4 | 34 | 100 |
| MFR21/MFR2 | 59.2 | 60.9 | 36 | 67 |
| TM (MPa) | 950 | 1028 | 1031 | 920 |
| NIS (kJ/m$^2$) | 17.8 | 16.1 | 37.7 | 12 |
| MFR in GPR | 0.002 | 0.012 | - | 0.004 |
| Density in GPR | 941.6 | 956.5 | - | 937 |
| $\Delta$density* | 28.4 | 13.5 | | 33 |
| * $\Delta$density = Density (low molecular weight) - Density (high molecular weight) | | | | |

## Formation of Compositions and Test Specimens

The desired amount of HDPE powder and additive were premixed in an intensive mixer and then compounded on a ZSK 57 twin screw extruder. The melt temperature was 210°C, production rate was 200kg/h. The following additives were added: 0.05wt% Irganox 1010 (BASF), 0.2 wt% Irgafos 168 (BASF) & 0.05 wt% CEASIT FI, where wt% are relative to total weight of composition (the sum HDPE powder + additive = 100%).

Five compositions were prepared as shown in Table 2 via blending. The blending was done on a ZSK 18 twin screw extruder, with melt temperature of 210°C, output rate 7kg/h. The coefficient of friction was measured on 150 x 80 x 1 mm$^3$ injection moulded specimens at a series of time periods and results are shown in Table 2.

As can be seen, the combination of saturated amide and bimodal HDPE gives sufficient slip effect, which is at least comparable to that obtained with Erucamide in CE1 (which presents the known problems of oxidation). CE2 is a combination of unimodal HDPE and saturated amide, it has very poor slip effect compared to the inventive bimodal HDPE compositions with the same recipe. Generally, the IEs have CoF < 0.3 which fulfills all needs. Combining the mechanical properties and the CoF effect, the results show that the IEs gives the best combination of slip effect and improved mechanical properties.

**Table 2: Compositions and Properties of Moulded Articles.**

| | IE1 | IE2 | IE3 | CE1 | CE2 |
|---|---|---|---|---|---|
| HDPE1 (wt%) | 99.8 | 99.8 | | 99.8 | |
| HDPE2 (wt%) | | | 99.8 | | |
| HDPE3 (wt%) | | | | | 99.8 |
| Slip Agent 1 (wt%) | 0.2 | | 0.2 | | 0.2 |
| Slip Agent 2 (wt%) | | 0.2 | | | |
| Slip Agent 3 (wt%) | | | | 0.2 | |
| MFR$_2$ of blend (g/10 min) | 0.8 | 0.85 | 1.28 | 0.8 | 1.0 |
| | | | | | |

(continued)

| Coefficient of Friction | | | | | |
|---|---|---|---|---|---|
| 1 day | 0.2 | 0.29 | 0.23 | 0.12 | 0.51 |
| 3 days | 0.19 | 0.24 | 0.24 | 0.09 | 0.49 |
| 7 days | 0.21 | 0.23 | 0.22 | 0.17 | 0.32 |
| 14 days | 0.15 | 0.20 | 0.21 | 0.09 | 0.33 |

## Claims

1. A polymer composition comprising:

   (i) 95.0 to 99.95 wt%, relative to the total weight of the polymer composition, of a multimodal high density polyethylene (HDPE) with a density of 945 to 980 $kg/m^3$ measured according to ISO 1183, and an $MFR_2$ of 0.1 to 1.3 g/10min measured according to ISO 1133 at 190 °C and a load of 2.16 kg; and wherein the multimodal HDPE comprises at least two fractions:

   (A) 30 to 70 wt%, relative to the total weight of the multimodal HDPE, of a lower molecular weight fraction being a polyethylene with a density in the range of 955 to 980 $kg/m^3$ measured according to ISO 1183 and an $MFR_2$ of 100 to 600 g/10 min measured according to ISO 1133 at 190 °C and a load of 2.16 kg; and
   (B) 30 to 70 wt%, relative to the total weight of the multimodal HDPE, of a higher molecular weight fraction being a polyethylene with a density in the range of 930 to 960 $kg/m^3$ measured according to ISO 1183 and an $MFR_2$ of 0.0001 to 1.0 g/10 min measured according to ISO 1133 at 190 °C and a load of 2.16 kg; and

   (ii) 0.08 to 0.4 wt%, relative to the total weight of the polymer composition, of at least one saturated amide slip agent.

2. The polymer composition as claimed in claim 1, wherein the lower molecular weight fraction (A) of the HDPE has an $MFR_2$ of 125 to 500 g/10min, preferably 150 to 400 g/10min, more preferably 200 to 380 g/10 min.

3. The polymer composition as claimed in claim 1 or 2, wherein the HDPE has a density of 950 to 970 $kg/m^3$, preferably 951 to 965 $kg/m^3$, more preferably 952 to 963 $kg/m^3$, even more preferably 953 to 960 $kg/m^3$.

4. The polymer composition as claimed in any of claims 1 to 3, wherein the HDPE has an $MFR_{21}$ of 15 to 90 g/10min, such as 20 to 85 g/10 min, most preferably 30 to 80 g/10 min measured according to ISO 1133 at 190 °C and a load of 21.6 kg.

5. The polymer composition as claimed in any of claim 1 to 4, wherein the HDPE has a tensile modulus measured according to ISO 527-2, in the range 930 to 1500 MPa, preferably 940 to 1200 MPa

6. The polymer composition as claimed in any of claims 1 to 5, wherein the HDPE has a notched impact strength measured according to ISO 179, 1eA at +23 °C, in the range 13 to 25 $kJ/m^2$, preferably 15 to 20 $kJ/m^2$.

7. The polymer composition as claimed in any of claims 1 to 6, wherein said lower molecular weight (LMW) fraction (A) is an ethylene homopolymer.

8. The polymer composition as claimed in any of claims 1 to 7, wherein said higher molecular weight (HMW) fraction (B) is a copolymer of ethylene with at least one alpha-olefin comonomer, preferably but-1-ene.

9. The polymer composition as claimed in any of claims 1 to 8, wherein said HDPE comprises 35 to 60 wt% of fraction (A) and 40 to 65 wt% fraction (B), preferably 40 to 55 wt% of fraction (A) and 45 to 60 wt% fraction (B), relative to the total weight of the HDPE as a whole.

10. The polymer composition as claimed in any of claims 1 to 9, wherein the saturated amide slip agent is selected from the group consisting of behenamide, arachidamide, stearamide, palmitamide, myristamide, lauramide and mixtures thereof, preferably behenamide, stearamide and mixtures thereof.

11. The polymer composition as claimed in any of claims 1 to 10, wherein said composition comprises 96.0 to 99.92 wt% of the HDPE, relative to the total weight of the composition as a whole, preferably 97.0 to 99.90 wt%.

12. The polymer composition as claimed in any of claims 1 to 11, wherein said composition comprises 0.1 to 0.3 wt% of the amide slip agent, relative to the total weight of the composition as a whole, preferably 0.12 to 0.25 wt%.

13. An article comprising a polymer composition as claimed in any of claims 1 to 12.

14. The article as claimed in claim 13, wherein said article is an injection or compression moulded article, preferably an injection moulded article, such as a cap or closure.

15. Use of the polymer composition as claimed in any one of claims 1 to 12 in the manufacture of an article, preferably an injection or compression moulded article, such as a cap or closure.


**Patentansprüche**

1. Polymerzusammensetzung, umfassend:

(i) 95,0 bis 99,95 Gew.-%, bezogen auf das Gesamtgewicht der Polymerzusammensetzung, eines multimodalen hochdichten Polyethylens (HDPE) mit einer Dichte von 945 bis 980 kg/m$^3$, gemessen nach ISO 1183, und einem MFR$_2$ von 0,1 bis 1,3 g/10 min, gemessen nach ISO 1133 bei 190 °C und einer Last von 2,16 kg; und wobei das multimodale HDPE mindestens zwei Fraktionen umfasst:

(A) 30 bis 70 Gew.-%, bezogen auf das Gesamtgewicht des multimodalen HDPE, einer Fraktion mit niedrigerem Molekulargewicht, die ein Polyethylen mit einer Dichte im Bereich von 955 bis 980 kg/m$^3$, gemessen nach ISO 1183, und einem MFR$_2$ von 100 bis 600 g/10 min, gemessen nach ISO 1133 bei 190 °C und einer Last von 2,16 kg, ist; und
(B) 30 bis 70 Gew.-%, bezogen auf das Gesamtgewicht des multimodalen HDPE, einer Fraktion mit höherem Molekulargewicht, die ein Polyethylen mit einer Dichte im Bereich von 930 bis 960 kg/m$^3$, gemessen nach ISO 1183, und einem MFR$_2$ von 0,0001 bis 1,0 g/10 min, gemessen nach ISO 1133 bei 190 °C und einer Last von 2,16 kg, ist; und

(ii) 0,08 bis 0,4 Gew.-%, bezogen auf das Gesamtgewicht der Polymerzusammensetzung, mindestens eines gesättigten Amid-Gleitmittels.

2. Polymerzusammensetzung nach Anspruch 1, wobei die Fraktion (A) mit niedrigerem Molekulargewicht des HDPE ein MFR$_2$ von 125 bis 500 g/10 min, vorzugsweise 150 bis 400 g/10 min, bevorzugter 200 bis 380 g/10 min aufweist.

3. Polymerzusammensetzung nach Anspruch 1 oder 2, wobei das HDPE eine Dichte von 950 bis 970 kg/m$^3$, vorzugsweise 951 bis 965 kg/m$^3$, bevorzugter 952 bis 963 kg/m$^3$, noch bevorzugter 953 bis 960 kg/m$^3$ aufweist.

4. Polymerzusammensetzung nach einem der Ansprüche 1 bis 3, wobei das HDPE ein MFR$_{21}$ von 15 bis 90 g/10 min aufweist, wie 20 bis 85 g/10 min, besonders bevorzugt 30 bis 80 g/10 min, gemessen nach ISO 1133 bei 190 °C und einer Last von 21,6 kg.

5. Polymerzusammensetzung nach einem der Ansprüche 1 bis 4, wobei das HDPE einen Zugmodul, gemessen nach ISO 527-2, im Bereich von 930 bis 1500 MPa, vorzugsweise 940 bis 1200 MPa aufweist.

6. Polymerzusammensetzung nach einem der Ansprüche 1 bis 5, wobei das HDPE eine Kerbschlagzähigkeit, gemessen nach ISO 179, 1eA bei +23 °C, im Bereich 13 bis 25 kJ/m$^2$, vorzugsweise 15 bis 20 kJ/m$^2$ aufweist.

7. Polymerzusammensetzung nach einem der Ansprüche 1 bis 6, wobei die Fraktion (A) mit niedrigerem Molekulargewicht (LMW) ein Ethylenhomopolymer ist.

8. Polymerzusammensetzung nach einem der Ansprüche 1 bis 7, wobei die Fraktion (B) mit höherem Molekulargewicht (HMW) ein Copolymer von Ethylen mit mindestens einem Alpha-Olefin-Comonomer, vorzugsweise But-1-en, ist.

9. Polymerzusammensetzung nach einem der Ansprüche 1 bis 8, wobei das HDPE 35 bis 60 Gew.-% von Fraktion (A) und 40 bis 65 Gew.-% Fraktion (B), vorzugsweise 40 bis 55 Gew.-% von Fraktion (A) und 45 bis 60 Gew.-% Fraktion (B), bezogen auf das Gesamtgewicht des HDPE als ein Ganzes, umfasst.

10. Polymerzusammensetzung nach einem der Ansprüche 1 bis 9, wobei das gesättigte Amid-Gleitmittel ausgewählt ist aus der Gruppe bestehend aus Behenamid, Arachidamid, Stearamid, Palmitamid, Myristamid, Lauramid und Gemische davon, vorzugsweise Behenamid, Stearamid und Gemische davon.

11. Polymerzusammensetzung nach einem der Ansprüche 1 bis 10, wobei die Zusammensetzung 96,0 bis 99,92 Gew.-% das HDPE, bezogen auf das Gesamtgewicht der Zusammensetzung als ein Ganzes, vorzugsweise 97,0 bis 99,90 Gew.-% umfasst.

12. Polymerzusammensetzung nach einem der Ansprüche 1 bis 11, wobei die Zusammensetzung 0,1 bis 0,3 Gew.-% des Amid-Gleitmittels, bezogen auf das Gesamtgewicht der Zusammensetzung als ein Ganzes, vorzugsweise 0,12 bis 0,25 Gew.-% umfasst.

13. Artikel, der eine Polymerzusammensetzung nach einem der Ansprüche 1 bis 12 umfasst.

14. Artikel nach Anspruch 13, wobei der Artikel ein spritzgegossener oder formgepresster Artikel ist, vorzugsweise ein spritzgegossener Artikel, wie eine Kappe oder ein Verschluss.

15. Verwendung der Polymerzusammensetzung nach einem der Ansprüche 1 bis 12 bei der Herstellung eines Artikels, vorzugsweise eines spritzgegossenen oder formgepressten Artikels, wie einer Kappe oder eines Verschlusses.

**Revendications**

1. Composition de polymère comprenant

(i) 95,0 à 99,95 % en poids, par rapport au poids total de la composition de polymère, d'un polyéthylène haute densité (HDPE) multimodal avec une densité de 945 à 980 kg/m$^3$ mesurée selon la norme ISO 1183 et un $MFR_2$ de 0,1 à 1,3 g/10 min mesuré selon la norme ISO 1133 à 190 °C et une charge de 2,16 kg ; et dans laquelle le HDPE multimodal comprend au moins deux fractions :

(A) 30 à 70 % en poids, par rapport au poids total du HDPE multimodal, d'une fraction de poids moléculaire inférieur étant un polyéthylène avec une densité dans la plage de 955 à 980 kg/m$^3$ mesurée selon la norme ISO 1183 et un $MFR_2$ de 100 à 600 g/10 min mesuré selon la norme ISO 1133 à 190 °C et une charge de 2,16 kg ; et
(B) 30 à 70 % en poids, par rapport au poids total du HDPE multimodal, d'une fraction de poids moléculaire supérieur étant un polyéthylène avec une densité dans la plage de 930 à 960 kg/m$^3$ mesurée selon la norme ISO 1183 et un $MFR_2$ de 0,0001 à 1,0 g/10 min mesuré selon la norme ISO 1133 à 190 °C et une charge de 2,16 kg ; et

(ii) 0,08 à 0,4 % en poids, par rapport au poids total de la composition de polymère, d'au moins un agent glissant amide saturé.

2. Composition de polymère selon la revendication 1, dans laquelle la fraction de poids moléculaire inférieur (A) du HDPE présente un $MFR_2$ de 125 à 500 g/10 min, préférentiellement de 150 à 400 g/10 min, plus préférentiellement de 200 à 380 g/10 min.

3. Composition de polymère selon la revendication 1 ou 2, dans laquelle le HDPE présente une densité de 950 à 970 kg/m$^3$, préférentiellement de 951 à 965 kg/m$^3$, plus préférentiellement de 952 à 963 kg/m$^3$, encore plus préférentiellement de 953 à 960 kg/m$^3$.

4. Composition de polymère selon l'une quelconque des revendications 1 à 3, dans laquelle le HDPE présente un $MFR_{21}$ de 15 à 90 g/10 min, tel que 20 à 85 g/10 min, le plus préférentiellement de 30 à 80 g/10 min mesuré selon la norme ISO 1133 à 190 °C et une charge de 21,6 kg.

5. Composition de polymère selon l'une quelconque des revendications 1 à 4, dans laquelle le HDPE présente un module d'élasticité en traction mesuré selon la norme ISO 527-2, dans la plage de 930 à 1500 MPa, préférentiellement de 940 à 1 200 MPa.

6. Composition de polymère selon l'une quelconque des revendications 1 à 5, dans laquelle le HDPE présente une résistance au choc sur éprouvette entaillée mesurée selon la norme ISO 179, 1eA à +23 °C, dans la plage de 13 à 25 kJ/m$^2$, préférentiellement de 15 à 20 kJ/m$^2$.

7. Composition de polymère selon l'une quelconque des revendications 1 à 6, dans laquelle ladite fraction de poids moléculaire inférieur (LMW) (A) est un homopolymère d'éthylène.

8. Composition de polymère selon l'une quelconque des revendications 1 à 7, dans laquelle ladite fraction de poids moléculaire supérieur (HMW) (B) est un copolymère d'éthylène avec au moins un comonomère d'alpha-oléfine, préférentiellement le but-1-ène.

9. Composition de polymère selon l'une quelconque des revendications 1 à 8, dans laquelle ledit HDPE comprend 35 à 60 % en poids de fraction (A) et 40 à 65 % en poids de fraction (B), préférentiellement 40 à 55 % en poids de fraction (A) et 45 à 60 % en poids de fraction (B), par rapport au poids total du HDPE dans son ensemble.

10. Composition de polymère selon l'une quelconque des revendications 1 à 9, dans laquelle l'agent glissant amide saturé est choisi dans le groupe consistant en béhénamide, arachidamide, stéaramide, palmitamide, myristamide, lauramide et des mélanges de ceux-ci, préférentiellement béhénamide, stéaramide et des mélanges de ceux-ci.

11. Composition de polymère selon l'une quelconque des revendications 1 à 10, dans laquelle ladite composition comprend 96,0 à 99,92 % en poids du HDPE, par rapport au poids total de la composition dans son ensemble, préférentiellement 97,0 à 99,90 % en poids.

12. Composition de polymère selon l'une quelconque des revendications 1 à 11, dans laquelle ladite composition comprend 0,1 à 0,3 % en poids de l'agent glissant amide, par rapport au poids total de la composition dans son ensemble, préférentiellement 0,12 à 0,25 % en poids.

13. Article comprenant une composition de polymère selon l'une quelconque des revendications 1 à 12.

14. Article selon la revendication 13, dans lequel ledit article est un article moulé par injection ou par compression, préférentiellement un article moulé par injection, tel qu'un bouchon ou une fermeture.

15. Utilisation de la composition de polymère selon l'une quelconque des revendications 1 à 12 dans la fabrication d'un article, préférentiellement un article moulé par injection ou par compression, tel qu'un bouchon ou une fermeture.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1278797 A
- WO 9744371 A
- WO 9618662 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- WO 9619503 A
- WO 9632420 A
- EP 1378528 A1
- EP 2994506 A
- EP 688794 A
- WO 9951646 A
- WO 0155230 A
- WO 2005118655 A
- EP 810235 A
- WO 2014096296 A
- WO 2016097193 A
- EP 2402391 A

### Non-patent literature cited in the description

- **B. HAGSTRÖM**. *Conference on Polymer Processing (The Polymer Processing Society), Extended Abstracts and Final Programme*, 19 August 1997, vol. 4, 13
- Nomenclature of Inorganic Chemistry. *IUPAC*, 1989
- **KLIMKE, K. ; PARKINSON, M. ; PIEL, C. ; KAMINSKY, W. ; SPIESS, H.W ; WILHELM, M.** *Macromol. Chem. Phys.*, 2006, vol. 207, 382
- **PARKINSON, M. ; KLIMKE, K ; SPIESS, H.W. ; WILHELM, M.** *Macromol. Chem. Phys.*, 2007, vol. 208, 2128
- **POLLARD, M. ; KLIMKE, K. ; GRAF, R. ; SPIESS, H.W ; WILHELM, M. ; SPERBER, O. ; PIEL, C. ; KAMINSKY, W.** *Macromolecules*, 2004, vol. 37, 813
- **FILIP, X. ; TRIPON, C. ; FILIP, C.** *J. Mag. Resn.*, 2005, vol. 176, 239
- **GRIFFIN, J.M. ; TRIPON, C. ; SAMOSON, A. ; FILIP, C. ; BROWN, S.P.** *Mag. Res. in Chem.*, 2007, vol. 45, S1, S198
- **CASTIGNOLLES, P. ; GRAF, R. ; PARKINSON, M ; WILHELM, M. ; GABORIEAU, M.** *Polymer*, 2009, vol. 50, 2373
- **BUSICO, V. ; CIPULLO, R.** *Prog. Polym. Sci.*, 2001, vol. 26, 443
- **BUSICO, V. ; CIPULLO, R ; MONACO, G. ; VACATELLO, M ; SEGRE, A.L.** *Macromoleucles*, 1997, vol. 30, 6251
- **ZHOU, Z. ; KUEMMERLE, R. ; QIU, X. ; REDWINE, D ; CONG, R. ; TAHA, A. ; BAUGH, D. ; WINNIFORD, B.** *J. Mag. Reson.*, 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.*, 2007, vol. 28, 1128
- **RESCONI, L. ; CAVALLO, L ; FAIT, A. ; PIEMONTESI, F.** *Chem. Rev.*, 2000, vol. 100, 1253